Europäisches Patentamt

European Patent Office

Office européen des brevets

(11) Veröffentlichungsnummer: **0 456 787 B1**

(12) **EUROPÄISCHE PATENTSCHRIFT**

(45) Veröffentlichungstag der Patentschrift: **27.07.94**

(51) Int. Cl.⁵: **G01N 29/02**

(21) Anmeldenummer: **90917292.6**

(22) Anmeldetag: **30.11.90**

(86) Internationale Anmeldenummer:
**PCT/CH90/00277**

(87) Internationale Veröffentlichungsnummer:
**WO 91/09306 (27.06.91 91/14)**

(54) **SELEKTIVE GASDETEKTION DURCH FELDSEPARATION UND SCHALLGESCHWINDIGKEITSMESSUNG: SAUERSTOFF-DETEKTION.**

(30) Priorität: **08.12.89 CH 4406/89**

(43) Veröffentlichungstag der Anmeldung:
**21.11.91 Patentblatt 91/47**

(45) Bekanntmachung des Hinweises auf die
Patenterteilung:
**27.07.94 Patentblatt 94/30**

(84) Benannte Vertragsstaaten:
**AT BE CH DE FR GB IT LI NL**

(56) Entgegenhaltungen:
**WO-A-89/07753**
**GB-A- 2 203 247**

(73) Patentinhaber: **OEHLER, Oscar, Dr.**
**Streulistrasse 24**
**CH-8032 Zürich(CH)**

(72) Erfinder: **OEHLER, Oscar, Dr.**
**Streulistrasse 24**
**CH-8032 Zürich(CH)**

## Beschreibung

Die Erfindung liegt auf dem Gebiet der Gassensorik. Sie betrifft ein Verfahren und eine Vorrichtung zum selektiven Nachweis von Gasen und Dämpfen, insbesondere Sauerstoff.

Es besteht ein stets wachsendes Bedürfnis, Gase selektiv und zuverlässig nachzuweisen. Einerseits stellt die Messung von Gasen, insbesondere schädlichen Komponenten, ein wichtiges Gebiet von ökologischen Untersuchungen dar. Auch in der Medizinaltechnik wird die Messung von Gaskonzentrationen zusehens wichtiger, beispielsweise im Zusammenhang mit der Ueberwachung der Atmungstätigkeit.

Es existieren verschiedene Methoden zum selektiven Gasnachweis. Sehr preisgünstige, allerdings in der Regel nicht sehr selektive Lösungen bieten Festkörpergassensoren. Diese beruhen teilweise auf einer katalytischen Verbrennung, wobei beispielsweise die Wärmetönung (Pellistor) oder die Produktion resp. die Reduktion von Sauerstoff-Leerstellen (Metalloxid-Halbleitergassensor) gemessen werden. Grosse Bedeutung haben die Gassensoren, die sich auf einen Feldeffekttransistor mit gassensiver Gate-Elektrode abstützen. Wichtig sind ferner chemische Sensoren, welche die Ionenleitung in Elektrolyten nutzen, demzufolge eine Lösbarkeit des Gases im Elektrolyten verlangen. Die Lambda-Sonde, welche in dem mit Katalysator ausgerüsteten Auto eine wichtige Rolle spielt, beruht beispielsweise auf der Lösbarkeit von Sauerstoff in Zirkonoxid bei hoher Temperatur und einer entsprechenden Sauerstoffionenleitung.

Hohe Selektivität und hohe Empfindlichkeit besitzen die optischen Gassensoren. Beispielsweise erlaubt das optischen Emissionsvermögen von Gasen selbst bei äusserst kleiner Konzentration einen sehr zuverlässiger Nachweis.

Viele Gase und Dämpfe lassen sich aufgrund ihres selektiven Absorptionsvermögens von infraroter Strahlung nachweisen. So existiert auf dem Markt eine grosse Anzahl von Instrumenten, welche auf einer Infrarot-Extinktionsmessung beruhen. Weiter lassen sich unter Nutzung des photoakustischen Effektes, der auf einer mikrophonischen Messung von Gasdruckschwankungen beruht, die bei Absorption von intensitätsmodulierter Infrarotstrahlung erzeugt werden, Gase sehr zuverlässig und selektiv detektieren. Allerdings ist bei photoakustischen Messungen darauf hinzuweisen, dass sich eine akustische Störbarkeit, bedingt durch das Messprinzip, nie ganz verhindern lässt.

Die wichtigste Voraussetzung für ein auf Infrarotspektroskopie beruhenden Detektionsverfahren ist die Absorptionsfähigkeit des Gases in diesem Strahlungsbereich. Die meisten Gase und Dämpfe besitzen ein sehr charakteristisches Spektrum im mittleren Infrarot, das beim Auftreten von Dipolmomentänderungen während molekül-internen Schwingungen zustande kommt. Nur einatomige Gase, wie die Edelgase He, Ar usw, sowie homomolekulare zweiatomige Gase, also beispielsweise $N_2$ und $O_2$ sind infrarotspektrokopischen Untersuchungen nicht zugänglich. Gerade Sauerstoff ist aber in der medizinischen Analytik und der Feuerungstechnik (Regelung von Heizungsanlagen) sehr wichtig.

Zum selektiven Nachweis von Sauerstoff bestehen verschiedene Möglichkeiten. Insbesondere haben sich Verfahren, welche die paramagnetische Eigenschaft von molekularem Sauerstoff nutzen, sehr gut bewährt. Während die meisten Gase sehr schwach diamagnetisch sind (die Suszeptibilität beträgt grössenordnungsmässig - $0.5 \cdot 10^{-9}$ SI-Einheiten), ist Sauerstoff nebst NO ($+ 48.7 \cdot 10^{-9}$) und $NO_2$ ($+ 3.3 \cdot 10^{-9}$) durch eine hohe paramagnetische Suszeptibilität von $107.8 \cdot 10^{-9}$ SI-Einheiten ausgezeichnet.

Herkömmliche Verfahren zur Nutzung des Paramagnetismus von Sauerstoff zu dessen selektivem Nachweis beruhen beispielsweise auf der Temperaturabhängigkeit der magnetischen Suszeptibilität. Entsprechend dem Curie-Gesetz wird bei den sog. thermomagnetischen Geräten die Suszeptibilität zweier Gasproben bei verschiedener Temperatur verglichen. Der Nachweis beruht auf der Messung der Gasströmung, dem sog. magnetischem Wind, zwischen den Gasproben verschiedener Temperatur. Solche Geräte sind relativ langsam, da ihnen ein thermischer Effekt zugrunde liegt. Ebenso ist wegen der Störbarkeit durch konvektive Luftströmungen eine Lageabhängigkeit des Sensors vorhanden. Obwohl der Paramagnetismus von Sauerstoff sehr spezifisch ist, besteht über die Wärmeleitfähigkeit von Gasmischungen zusätzlich eine Querempfindlichkeit mit anderen Gasen.

Ein weiteres, bewährtes Verfahren zur paramagnetischen Sauerstoffdetektion beruht auf dem magnetomechanischen Prinzip. Zur Anwendung dieses Verfahrens wird meistens eine aus zwei Glaskügelchen bestehende kleine, symmetrische Hanteln in einem inhomogenen Magnetfeld angeordnet. Eine Sauerstoff enthaltende, paramagnetische Gasmischung wird von einem inhomogenen Magnetfeld angezogen. Da die Glaskügelchen entweder evakuiert sind, oder ein diamagnetisches Gas enthalten, erfahren sie bei Anwesenheit von Sauerstoff im inhomogene Magnetfeld einen negativen Auftrieb. Somit erfährt die Hantel, welche an einem Torsinsfaden aufgehängt ist, ein Drehmoment. Die Anslenkung, die optisch gemessen wird, ist proportional zum Auftrieb, somit zur Sauerstoffkonzentration des Gases. Solche Geräte weisen eine gute Linearität auf. Ihre Ansprechzeit beträgt ca 5 sec, was für die meisten Anwendungen, ausser für die klinische Ueberwachung der Atmung, akzeptierbar ist. Wegen ihrer empfindlichen Mechanik sind solche Geräte relativ teuer und mechanisch störbar.

Eine weitere wirtschaftliche Bedeutung haben Sauerstoffmessgeräte, die nach dem magnetopneumatischen Prinzip arbeiten. Die Detektion beruht auf dem Messung der Druckerhöhung, welches das sauerstoffhaltige Messgas im Magnetfeld erfährt. Da diese Druckerhöhung mit ca $10^{-4}$ mbar relativ klein ist, ist eine raffinierte Druckmessmethode erforderlich. Beispielsweise kann die Druckdifferenz über eine Gasströmungsgeschwindigkeit bestimmt werden. In diesem Falle ist eine Vergleichsmessung mit einem Referenzgas notwendig. Eine andere Möglichkeit besteht darin, dass die durch Modulation des Magnetfeldes erzeugten Druckdifferenzen mittels eines Mikrophons gemessen wird. In diesem Falle lässt sich die bei Atemvorgängen typische zeitliche Auflösung von 0.1 sec mit einem erreichbaren $t_{90}$ - Wert von 0.15 sec annähernd erreichen. Wegen des minimal erforderlichen Volumens von ca 20 $cm^3$ lassen sich allerdings noch kürzere Ansprechzeiten nur schwierig realisieren.

Zusammenfassend lässt sich festhalten, dass verschiedene, auf der paramagnetischen Eigenschaft beruhende Methoden entwickelt worden sind, die einen selektiven und zuverlässigen Nachweis von Sauerstoff erlauben. Allen diesen Methoden ist gemeinsam, dass die Realisierung entsprechender Apparaturen relativ grossen Aufwand erfordern und wegen der Kleinheit des Effektes eine grosse Störanfälligkeit in Bezug auf die Lage des Sensors, dessen Temperatur usw. vorhanden ist. Zudem kann die für medizinische Anwendungen erforderliche zeitliche Auflösung nicht oder nur knapp erreicht werden kann.

Es ist Aufgabe der Erfindung, ein Verfahren anzugeben und eine entsprechende Vorrichtung zu schaffen, die es erlauben, Gase und Dämpfe aufgrund ihres magnetischen oder elektrischen Dipolmomentes selektiv zu detektieren.

Die Aufgabe wird gelöst durch Separation paramagnetischer resp. mit elektrischem Dipol versehenen Moleküle einer Mischung gasförmiger Medien im anisotropen, zeitlich veränderlichen, magnetischen resp. elektrischen Feld und der Detektion der Gas- oder Dampf-Konzentrationsänderung über die Veränderung der Schallgeschwindigkeit. Letztere wird insbesonders durch die Verstimmung eines Ultraschallresonators erfasst.

Es ist wohlbekannt, dass paramagnetische Moleküle, wie etwa Sauerstoff, aufgrund ihres magnetischen Momentes in einem anisotropen Magnetfeld eine Anziehung erfahren. Ebenso ist es naheliegend, dass Moleküle mit einem elektrischen Dipolmoment, etwa Wasserdampf von einem anisotropen elektrischen Feld angezogen werden.

Die beschriebenen magnetomechanischen Sauerstoffdetektionsgerät beruhen auf dem Auftriebseffekt paramagnetischer Moleküle im anisotropen Magnetfeld. Es ist weiter anzunehmen, dass unter der Wirkung des inhomogenen Magnetfeldes auf die paramagnetischen Moleküle einer Gasmischung eine Anreicherung der entsprechenden Gaskomponenten zustande kommen kann. Es scheint aber zunächst völlig absurd, diesen Effekt zur Detektion von paramagnetischen oder mit elektrischem Dipol behafteten Gasen zu nutzen. Wäre ein nicht sehr kleiner Anreicherungseffekt vorhanden, so müsste sich das in einer nichtlinearen Sauerstoffkonzentrationsabhängigkeit des Auftriebes in einem inhomogenen Magnetfeld manifestieren. Wie aber im "Handbuch der industriellen Messtechnik", Essen (1974) von P. Profos nachzulesen ist, zeichnen sich magnetomechanische Sauerstoff-Nachweisgeräte durch eine "streng lineare Anzeige" aus.

Auch eine einfache Abschätzung des Anreicherungseffektes von Sauerstoff in Luft führt zu einem bedenklich kleinen Resultat:

Im erwähnten Handbuch der industriellen Messtechnik ist auf Seite 587 aufgeführt, dass auf die Glaskugelhantel bei magnetomechanischen Geräten ein Drehmoment in der Grössenordnung von $10^{-10}$ Nm wirkt. Aus den typischen geometrischen Daten der Hantel (Kugelnabstand 6.5 mm, Kugelinnendurchmesser 2 mm) folgt, dass bei einer Sauerstoffkonzentration von 20 % auf ein einzelnes Sauerstoffmolekül im inhomogenen Magnetfeld des Sensors eine Kraft $F = 7 \cdot 10^{-25}$ N wirkt. Zu einen ähnlichen Kraftwert von $F = 9.75 \cdot 10^{-25}$ N kommt man unter Verwendung der Suszeptibilität von Sauerstoff und der Annahme, dass sich das Molekül in einem inhomogenen Feld von 0.8 Tesla und einer Inhomogenität von 0.27 Tesla/mm befindet.

Ausgehend von dieser Kraft, die auf ein einzelnes Sauerstoffmolekül wirkt, lässt sich die Driftgeschwindigkeit $v_d(t)$ aufgrund der Formel:

$$v_d(t) = (v(0) - F \cdot B) \exp(-t/B \cdot m) + F \cdot B \quad V_d \approx F \cdot B$$

wo B die Beweglichkeit bedeutet, welche nach der Formel von Einstein:
$B \cdot k \cdot T = D$ aus der Diffusionskonstanten folgt. k bedeutet die Boltzmann-Konstante und m das Molekulargewicht von Sauerstoff.

Aufgrund der Diffusionskonstanten von Sauerstoff $B = 0.178$ $cm^2$/sec ergibt sich eine Driftgeschwindigkeit von $v_d = 4.2 \cdot 10^{-7}$ cm/sec.

Dieser sehr kleine Wert ist mit der mittleren thermischen Geschwindigkeit der Sauerstoffmoleküle bei 300 K von $v = 483$ m/s zu vergleichen. Es scheint daher zunächst völlig unmöglich, dass ein messbarer Separationseffekt des Sauerstoff erwartet werden kann.

Immerhin führt der Drift der Sauerstoffmoleküle in das inhomogene Magnetfeld zu einer lokalen Erhöhung der Gasdichte. Wegen der Dichteabhängigkeit der Schallgeschwindigkeit ergibt sich damit eine Veränderung der Schallgeschwindigkeit.

Aufgrund von eigenen Messungen erlaubt die Verwendung eines Ultraschallresonators die genaue Messung von periodischen Aenderungen der Schallgeschwindigkeit. Wie in der EP-Patentschrift Nr. 0 362 307 und im Artikel "Photothermal Spectroscopy and Calorymetry by Ultrasonics" von O. Oehler, S. Friedrich und A. Schäppi in Springer Series in Optical Sciences, **62**, "Photothermal and Photoacoustic Phenomena II", 519 (1990) und in "A MECHANICALLY TUNED ULTRASONIC CALORIMETER", O.Oehler, J. Wieland, D. Raillard and M. Schumacher, Helv. Phys. Acta, **63**, 829 (1990) nachzulesen ist, lässt sich mittels eines Ultraschallresonators eine periodische Temperaturänderung von $6 \cdot 10^{-5}$ Grad leicht nachweisen.

Es hat sich gezeigt, dass der Ultraschallresonator in dessen Zentralbereich eines Durchmessers von ca 2 mm eine maximale Temperatur- und damit auch eine Schallgeschwindigkeits-Empfindlichkelt aufweist. Der entsprechenden Hinweise ist im Artikel "A calorimeter based on ultrasonics" von O. Oehler, P. Rusch und S. Dornbierer, der in Helv. Phys. Acta., **63**, 533 (1990) festgehalten.

Nimmt man nun an, dass Sauerstoff aufgrund seiner paramagnetischen Eigenschaft mit der Geschwindigkeit von $v_d = 4.2 \cdot 10^{-7}$ cm/sec in einen Zylinder (Durchmesser d = 2 mm, Volumen V = $(d/2)^2 \cdot \pi \cdot l$) eindringt, so ergibt sich bei gleichmässiger Verteilung im Zylinder nach der Zeit $\Delta t$ die folgende relative Dichteänderung $\Delta \rho / \rho$ :

$$\Delta \rho / \rho = \Delta V/V = v_d \cdot \Delta t \cdot d \cdot \pi \quad l \; / \; (d/2)^2 \cdot \pi \cdot l = 4 \cdot v_d \cdot \Delta t/d$$

Unter Verwendung der berechneten Driftgeschwindigkeit ergibt sich nach einer sec eine relative Dichteänderung von:

$$\Delta \rho / \rho = 4 \cdot 4.2 \cdot 10^{-7} \cdot 1/0.2 = 8.4 \cdot 10^{-6}$$

Nach der Schallgeschwindigkeitsformel ergibt sich bei einer Dichteänderung die folgende Schallgeschwindigkeitsänderung:
aus $c = \sqrt{x \cdot p/\rho}$ wo $x = c_v/c_p$ Verhältnis der spez. Wärmen $\Delta c = - c/2 \cdot \Delta \rho / \rho$
Eingesetzt ergibt sich:

$$c = 1.34 \cdot 10^{-3} \text{ m/s}$$

Die Messungen haben bei einer $O_2$-Konzentration von 20 % ergeben:

$$c = 6.8 \cdot 10^{-4} \text{ m/s}$$

Aufgrund der erwähnten Temperaturempfindlichkeit des Ultraschallresonators von 60 $\mu$K ergibt sich entsprechend der Temperaturabhängigkeit der Schallgeschwindigkeit von 0.6 m/s•K eine Schallgeschwindigkeitsauflösung der Apparatur von:

$$c = 3.6 \cdot 10^{-5} \text{ m/s}$$

Wie das Experiment zeigte, ergeben damit auch die Berechnungen eine gute Messbarkeit des Effektes.

Es ist festzuhalten, dass es sich bei den angegebenen Berechnungen um eine grobe Abschätzung handelt, die aber die Brauchbarkeit des Verfahrens, die Sauerstoff-Aufkonzentration im inhomogenen Magnetfeld über die Schallgeschwindigkeitsänderung zu messen, beweist.

Ein Hinweis auf die Messbarkeit des Sauerstoffeffektes lässt sich auch dadurch finden, dass die Schallgeschwindigkeiten von Luft mit 331 m/sec und diejenige von Sauerstoff mit 316 m/sec einen erheblichen Unterschied von 15 m/sec aufweisen. Eine Aenderung der Sauerstoffkonzentration im schallgeschwindigkeits-empfindlichen Gebiet des Ultraschallresonators kann sich damit auf die Schallgeschwindigkeit des Sauerstoff-Stickstoffgemisches auswirken.

Die Bestimmung des Sauerstoffgehaltes einer Stickstoff-Sauerstoff-Mischung unter Nutzung der verschiedenen Schallgeschwindigkeit der beiden Gase könnte natürlich auch direkt - ohne Separation der beiden Komponenten im homogenen Magnetfeld - vorgenommen werden. Es ist aber festzuhalten, dass dann die Selektiviät der Sauerstoffmessung verloren ginge. So beeinflussen beispielsweise auch die Anwesenheit von Wasserdampf und Kohlensäure die Schallgeschwindigkeit. Das weiteren brächte eine direkte Messung der Schallgeschwindigkeit wegen derer Temperaturabhängigkeit ferner den Nachteil einer grossen Beeinflussbarkeit der Messung durch die Gastemperatur.

Da das aufgezeigte Verfahren nur die magnetfeldbedingten Aenderungen der Schallgeschwindigkeit misst, ist die Selektivität und die Temperaturunabhängigkeit weitgehend gewährleistet. Eine Querempfindlichkeit besteht lediglich mit Stickoxiden, da diese Gase ebenfalls paramagnetisch sind. In Abwesenheit von Sauerstoff lässt sich mit dem neuen Verfahren prinzipiell auch NO und $NO_2$ messen.

Der Befund der Detektierbarkeit von Sauerstoff im inhomogenen, modulierten Magnetfeld unter Verwendung eines Ultraschallresonators fand seine experimentelle Bestätigung. Der Sauerstoffgehalt der Luft lässt sich mit dem aufgezeigten Verfahren sehr gut nachweisen.

Beispiele des möglichen Aufbaus entsprechender Geräte sind im folgenden beschrieben:

Fig. 1    zeigt den Aufbau einer dem Stand der Technik entsprechenden Ultraschallresonator-Vorrichtung zur Messung von Temperaturschwankungen, die durch Lichtabsorption in einem Gas bedingt sind.

Fig. 2    ist die Darstellung der photothermischen Gasdetektionsvorrichtung, insbesondere eines $CO_2$-Nachweisgerätes, mit Modulations- und Filtriermitteln für die einfallende Lichtstrahlung.

Fig. 3    ist ein Beispiel eines entsprechenden Sauerstoffmessgerätes, bestehend aus einem Ultraschallresonator und einem inhomogenen Magnetfeld,

Fig. 4    ist eine Darstellung eines Gerätes zum Nachweis von Gasen mit grossem elektrischen Dipolmoment mittels eines Ultraschallresonastors und einem inhomogenen elektrischen Feld,

Fig. 5    charakterisiert die Kombination eines Sauerstoff-Sensors mit einem $CO_2$-Sensor durch gleichzeitige Anlegung eines inhomogenen Magnetfeldes und der Einstrahlung von Infrarotlicht in den Ultraschallresonator.

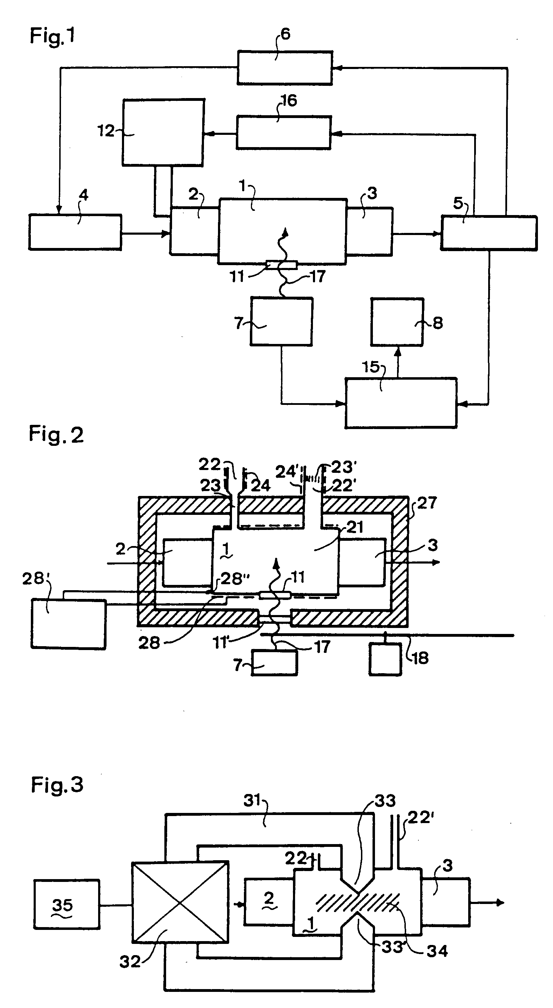

Die Darstellung von Fig.1 zeigt den Aufbau der bereits erwähnten Ultraschall-Vorrichtung zum Messen von kleinen, durch Absorption von Infrarotstrahlung bedingten Temperaturschwankungen in einem Gas. Die Methode der Gastemperaturmessung beruht auf der grossen Temperaturabhängigkeit der Schallgeschwindigkeit von Gasen. Dieselbe wird mittels eines Ultraschallfeldes, vornehmlich in Form eines akustischen Resonators 1, gemessen. Die akustische Resonanz baut sich zwischen dem Ultraschallwandler-Paar, bestehend aus dem Ultraschallsender 2 und dem Ultraschallempfänger 3, auf.

Der Ultraschallsender 2 wird durch den Generator 4 bei einer Frequenz von typischerweise mehreren hundert kHz angeregt. Das Signal des Generators kann sinusförmig sein oder aus einer regelmässigen Folge von beispielsweise rechteckförmigen Pulsen bestehen. Am Empfänger 3 erscheint ein Signal, dessen Enveloppe (peak-to-peak-Wert), nebst von der Empfindlichkeit des Empfängers 3 und der Schallabsorption im Resonatorraum 1, von der Abstimmung des Resonators 1 abhängt. Das Empfängersignal wird dem Hochfrequenz-Demodulator 5 zugeführt. Dieser Demodulator 5 analysiert entweder die Enveloppe des empfangenen Signales oder er bestimmt die Phasenlage des Signales bezüglich des Eingangssignales am Sender 2. Diese Analyse des vom Empfänger 3 gelieferte Signal beruht beispielsweise auf einer peak-to-peak-Messung, einer Gleichrichtung mit nachfolgenden Glättung, einer Phasendetektion oder einer phasenempfindlichen Verstärkung mittels eines Lock-in-Verstärkers.

Es ist angezeigt, den Ultraschallresonator durch Wahl der Frequenz und der Länge des Resonators im Fall einer Enveloppenanalyse in einer Resonanzflanke zu betreiben. Bei der Phasendetektion wird der Resonator vorteilhafterweise im Resonanzmaximum, also im Bereich der grössten Phasenänderung, betrieben. Weiterhin ist die Wahl einer möglichst hohen Ultraschall-Frequenz wegen der weitgehenden Proportionalität der Enveloppen-Steigung zur Frequenz empfehlenswert.

Die obere Limite der Ultraschallfrequenz ist durch das Schallabsorbtionsvermögen des Probegases, das oberhalb von 100 kHz mit zunehmender Frequenz stark ansteigt, gegeben. Es ist allerdings festzuhalten, dass die Frequenz höher gewählt werden kann, als dies mit kommerziellen luftangepassten Ultraschallwandlern möglich ist (50 kHz bis 220 kHz). Im vorliegenden Fall muss nämlich das Schallsignal nicht über eine Distanz von mehreren Metern oder Dezimetern effizient übertragen werden, wie das bei normalerweise erwünscht ist, sondern lediglich über einen Abstand im Millimeter-Bereich.

Mit dem Betrieb des Ultraschallresonators in einer Resonanzflanke bei der Enveloppenanalyse, oder im Resonanzmaximum bei der Phasendetektion sowie der Wahl einer hohen Frequenz wird erreicht, dass sich eine - beispielsweise temperaturbedingte - Aenderung in der Abstimmung maximal auf das Ausgangssignal des Hochfrequenz-Demodulators 5 auswirkt.

Die Aenderung der Resonator-Abstimmung lässt sich nun direkt der Veränderung der Signal-Enveloppe, also dem Quasi-Gleichstrom-Wert resp. der Pasenverschiebung am Hochfrequenz-Demodulator 5 entnehmen. Es ist allerdings festzuhalten, dass in beiden Fällen der lineare Temperatur-Messbereich sehr beschränkt ist. Da aber nur kleine Temperaturschwankungen gemessen werden sollen, ist diese Einschränkung nicht gravierend. Allerdings können langsame driftartige Temperaturänderungen ein Abwandern der Resonatorabstimmung und somit eine Aenderung der Temperaturempfindlichkeit bewirken. Es muss daher nach Wegen gesucht werden grossen Langzeiteffekten wirkungsvoll entgegenzuwirken.

Beispielsweise kann die Ultraschallfrequenz derart nachgeführt werden, dass die Resonator-Abstimmung, das heisst der peak-to-peak-Wert am Empfänger 3, konstant bleibt. Zu diesem Zweck kann beispielsweise das Ausgangssignal des Hochfrequenz-Demodulators 5 als Steuer-Signal über einen Hochfrequenz-Regler 6 einen spannungsgesteuerten Generator 4 zugeführt werden.

Der überstreichbare Temperatur-Messbereich ist durch den Operationsbereich der Ultraschallwandler gegeben. Typischerweise lassen sich mit Ultraschall-Wandlern 2, 3 Frequenzbereiche von 1% bis 2% der Sollfrequenz überstreichen.

Ein beliebig grosser Temperaturbereich lässt sich hingegen erreichen, wenn der Resonator 1 nicht elektrisch, sondern mittels einer mit dem Abstands-Regler 16 verbundenen mechanischen Verschiebe-Vorrichtung 12, beispielsweise einem Piezo-Translator, durch Veränderung der Ultraschall-Wandler-Abstandes abgestimmt wird. Die mechanische Verschiebevorrichtung kann sich seitlich der Ultraschallwandler 2, 3 befinden, wie das in Fig. 1 dargestellt ist, oder aber koaxial angeordnet sein. Im Falle der Verwendung eines Piezotranslators dürfte die zweite Konstruktion günstiger sein. Es ist allerdings festzuhalten, dass die mechanische Abstimmung des Resonators wegen der hohen verlangten Genauigkeit verhältnismässig aufwendig ist.

Denkbar ist eine Kombination beider Abstimmungsarten des Ultraschall-Resonators, also der mechanischen und der elektrischen Abstimmung. In Fig. 1 ist diese Situation eingezeichnet. Beispielsweise kann die Grobabstimmung mechanisch mit Hilfe des Abstands-Reglers 16 und der Verschiebe-Vorrichtung 12 vorgenommen werden, während die Feinabstimmung elektrisch mittels des Reglers 6 und des spannungskontrollierten Oszillators 4 bewerkstelligt wird.

Aus dem Ausgangs-Signal des Hochfrequenz-Demodulators 5, resp. aus der Regelgrösse, kann auf die Schallgeschwindigkeit und damit auf die Temperatur des Gases im Ultraschallresonator 1 geschlossen werden.

Temperatur-Variationen im Ultraschallresonator 1 können beispielsweise durch Licht- 17, insbesondere Infrarot-Einstrahlung, erreicht werden. Kleine Temperatur-Schwankungen im Ultraschallresonator 1, welche durch Absorption von intensitäsmodulierter Lichtstrahlung bewirkt werden und demzufolge mit dem Lichtsignal korreliert sind, sind als Niederfrequenzsignal mittels eines Niederfrequenz-Demodulator 15 beispielsweise in Form eines Lock-in-Verstärkers messbar. Letzterer verwendet als Referenz das intensitätsmodulierte Signal der Lichtquelle 7. Das Ausgangssignal des Demodulators 15 ist der gesuchte Messwert, der über die Lichtabsorption im Ultraschallresonator Auskunft gibt. Dieses Signal wird daher einem Registriergerät 8, beispielsweise einem Schreiber, einem Voltmeter oder einem Rechner, zugeführt. Das beschriebene Verfahren erlaubt es, Gastemperatur-Aenderungen bis in den Bereich von $10^{-4}$ Grad zu messen. Genauere Angaben sind in den Artikeln von O. Oehler, J. Wieland und S. Friedrich: "Measurement of small temperature variations in a gas by ultrasonics", Helv. Phys. Acta, **61**, 885 (1988) und »Ultrasonic device for detection of IR radiation absorbed in a gas", Proc. of the Int. Conf. on Infrared Phys., Zürich 1988, festgehalten.

Es scheint zunächst wenig sinnvoll, einerseits das Ansgangssignal des Hochfrequenz-Demodulators 5 zur weiteren Analyse im Niederfrequenz-Demodulator 15, beispielsweise im Lock-in-Verstärker zu verwenden, andererseits dieses Signal beispielsweise mittels des Reglers 6 auf festem Wert zu halten. Es ist aber naheliegend, mit Hilfe des Reglers 6 sehr langsame Drifterscheinungen zu kompensieren, sodass dem Niederfrequenz-Demodulator 15 die Messung der relativ raschen, mit der Lichtquelle synchronen, Signale zukommt.

Fig. 2 zeigt eine detaillierte Darstellung einer Vorrichtung zur Messung des photothermischen Effektes. Der Ultraschallresonators 1 wird durch die beiden Ultraschallwandler 2,3, die einander gegenüber angeordnet sind, gebildet. Das Licht der Quelle 7 gelangt durch ein Fenster 11 in den als Gasküvette ausgebildeten Ultraschallresonator 1. Zum Austausch des gasförmigen Messgutes 21 ist mindestens eine Oeffnung 22, 22' in der Wandung der Gasküvette vorhanden. Gegebenenfalls sind die Oeffnungen mit Strömungswiderständen 23, 23' versehen. Diese Strömungswiderstände können Ventile, Rohrverengungen 23 oder Filterplatten 23', resp. gaspermeable Membranen sein. Es ist festzuhalten, dass diesen Strömungswiderständen 23, 23' keine akustisch dämmende Wirkung zukommen muss - im Gegensatz zu photoakustischen Messungen bei tiefer Frequenz, wo eine gute akustische Abtrennung der Zelle von der Aussenwelt unumgänglich ist. Es muss lediglich erreicht werden, wie bereits erwähnt worden ist, dass sich äussere Temperaturfluktuationen nicht wesentlich auf den Ultraschallresonator 1 auswirken können. Auf das Lichteintrittsfenster 11 könnte verzichtet werden, falls gewährleistet ist, dass die Oeffnung im Ultraschallresonator keine wesentliche gaszirkulations-bedingten Temperaturfluktuationen bewirkt.

Zur Verhinderung von unerwünschten Temperaturfluktuationen im Ultraschallresonator 1 ist es empfehlenswert, denselben mit einer mantelförmigen Wärmeisolation 27 zu umgeben und/oder gegebenenfalls zu thermostatisieren. Dies kann beispielsweise mittels einer Thermostatierung 28, etwa einem Peltier- oder Heiz-Element, einem entsprechenden Steuergerät 28' und einem Thermosensors 28'' erreicht werden. Ebenso kann es Vorteile bringen, das gasförmige Messgut durch Thermostatierung der Zuleitungen mittels der thermostatisierenden Elemente 24, 24' auf die Temperatur des Ultraschallresonators 1 zu bringen.

Die Lichtquelle 7 ist intensitätsmoduliert, was beispielsweise durch Ein- und Aus-Schalten des Stromes, oder mittels eines Lichtchoppers 18, der sich im Lichtstrahl 17 zwischen der Lichtquelle 7 und dem Ultraschallresonator 1 befindet, erreicht wird. Zusätzlich kann im Lichtstrahl 17 ein optisches Filter 11' angeordnet sein. Die Einfügung eines solchen Filters ist vor allem dann angezeigt, wenn die Quelle 7 ein breitbandiges Spektrum aufweist, also wenn beispielsweise die Lichtquelle 7 ein thermischer Strahler ist. In diesem Falle kann ein optisches Bandpass-Filter 11' hinreichend monochromatische Strahlung erzeugen, sodass eine selektive Lichtabsorption durch Gase in der Küvette gewährleistet ist.

Falls die Wellenlänge des im Ultraschallresonator 1 durch das Fenster 11 einfallende Licht in einen spektralen Bereich fällt, wo Gase selektiv absorbieren, kann die in Fig.1 und Fig. 2 dargestellte Vorrichtung zum selektiven Nachweis von Gasen und Dämpfen verwendet werden. Die Empfindlichkeit ist zwar nicht derart hoch, wie bei einer auf dem photoakustischen Effekt basierenden Vorrichtung, hingegen weist die besprochene Vorrichtung eine praktisch verschwindende Störanfälligkeit gegenüber Druckfluktuationen und Körperschall auf. Wegen des hohen, selektiven Absorptionsvermögens von $CO_2$ bei 43 $\mu$m eignet sich das aufgezeigte Verfahren besonders gut zum Nachweis dieses Gases.

Fig. 3 zeigt ein Beispiel der erfinderischen Vorrichtung zum selektiven Nachweis von Sauerstoff und/oder andern gasförmigen Medien mit grosser paramagnetischer Suszeptibilität wie etwa NO oder $NO_2$. Ausgangspunkt der Vorrichtung ist wiederum der in Fig. 1 und 2 aufgezeigte Ultraschallresonator 1, der aus den zwei einander gegenüber angeordneten Ultraschallwandlern 2,3 mit zugehöriger Ansteuerungs- 4, 12, Regler- 6, 16 und der Demodulations-Elektronik 5, 15 gebildet wird. (Letztere Einheiten sind in Fig. 3 der Uebersichtlichkeit halber nicht abgebildet). Statt der Einführung eines intensitätsmodulierten Lichtstrahls 17 wird jedoch in der schallgeschwindigkeitsempfindlichen Zone 34 des Ultraschallresonators 1 ein zeitlich veränderliches inhomogenes Magnetfeld etabliert. Dasselbe kann beispielsweise mittels eines Elektromagneten, bestehend aus dem Spulenkörper 32, dem Anker 31 und den Polschuhen 33, 33' erzeugt werden. Die zeitlich veränderliche, insbesondere periodische Anregung des Magneten erfolgt über das Steuergerät 35. Dasselbe steht seinerseits mit dem Niederfrequenz-Demodulator 15 zur Lieferung des Referenzsignales in Verbindung.

Entweder im Niederfrequenz-Demodulator 15, oder im angeschlossenen Registiergerät 8, wie es in Fig 1 abgebildet ist, wird eine Linearisierung des Signales vorgenommen. Diese Massnahme ist notwendig, da, wie bereits erwähnt, die Amplitude des Niederfrequenzsignales nicht in linearem Zusammenhang mit der Sauerstoffkonzentration steht.

Die Inhomogenität es Magnetfeldes ist weitgehend durch die Formgebung der Polschuhe gegeben. Vorteilhaft zur Erreichung einer hohen Inhomogenität ist es, dieselben wie es in Fig. 3 abgebildet ist, in eine Spitze auslaufen zu lassen. Gegebenenfalls ist es günstiger, die Polschuhe schneidenförmig zu gestalten, wobei die Schneiden parallel zur zylinderförmigen schallempfindlichen Zone 34 des Ultraschallresonators verlaufen.

Das Messgas kann in Analogie zu der in Fig.2 gezeigten Vorrichtung über die Zuleitungen 22, 22' zugeführt werden, wobei zur Herabsetzung von gasströmungsbedingten Temperaturfluktuationen gegebenenfalls Strömungswiderstände 23, 23' in die Gaszuleitungen 22, 22' eingebaut sind. Eine zusätzliche Thermostatierung des zugeführten Gases mittels der am Zuleitungsrohr 22 angebrachten Thermostatisierung 24 mag vorteilhaft sein, ebenso wie die Thermostatisierung des Ultraschallresonators 1. Zu diesem Zweck kann, wie bereits im Zusammenhang mit Fig. 2 erwähnt, eine Thermostatisierung 28, beispielsweise ein Peltier- oder ein Heiz-Element dienen, das mit einem entsprechenden Steuergerät 28' in Verbindung steht und mit einem Thermosensors 28'' die Temperatur des Gehäuses des Ultraschallresonators 1 erfasst. Gegebenenfalls kann zusätzlich der Resonator mit einer Wärmeisolation 27, wie sie in Fig. 2 abgebildet ist, umgeben sein. Der Zweck der aufgezeigten Thermostatisierungsmassnahmen ist eine Verringerung von thermischen Störeinflüssen, die sich über die Themperaturabhängigkeit der Schallgeschwindigkeit auf die Abstimmung des Ultraschallresonators 1 manifestieren.

Eine weitere Störung kommt durch die Abhängigkeit der Schallgeschwindigkeit von der Gaszusammensetzung zustande. Das aufgezeigte Messverfahren nutzt zwar nur die periodische Aenderung der Schallgeschwindigkeit unter dem Einfluss des Magnetfeldes, doch führt die Aenderung der Schallgeschwindigkeit selbst zu einer wesentlichen Verstimmung des Resonators. Messungen haben zwar gezeigt, dass die Steigung der Resonanzkurve in einem weiten Bereich der Resonanz konstant ist. Es sei in diesem Zusammenhang auf den bereits zitierten Artikeln von O. Oehler, J. Wieland und S. Friedrich: "Measurement of small temperature variations in a gas by ultrasonics", Helv. Phys. Acta, **61**, 885 (1988) hingewiesen. Gegebenenfalls ist bei sehr grossen Aenderungen der Gaszusammensetzung der Resonator 1 durch Veränderung der Frequenz mittels des Generators 4 oder durch eine mechanische Abstimmung mittels der mechanischen Verschiebevorrichtung 12 abzustimmen.

Es ist festzuhalten, dass die Schallgeschwindigkeits-Variationen nicht notwendigerweise über einen Ultraschallresonator 1 gemessen werden müssen.

Es ist beispielsweise möglich, die Schallgeschwindigkeitsbeeinflussung durch eine Schalllaufzeitmessung zwischen dem Ultraschallsender 2 und dem Ultraschallempfänger 3 zu erfassen. So könnten vom Sender periodisch Pulse abgegeben und vom benachbarten Empfänger aufgenommen werden. Denkbar ist fernerhin, dass ein einziger Ultraschallwandler 2 abwechslungsweise als Sender und Empfänger eines Ultraschallpulses verwendet wird, wobei ein Reflektor das ausgesandte Signal zurückwirft. Diese beiden aufgezeigten Wege wären sicherlich gangbar, da bekanntlich eine Zeitdifferenz - in diesem Fall die Zeitspanne zwischen dem ausgesandten und dem empfangenen Signal - sehr genau gemessen werden kann.

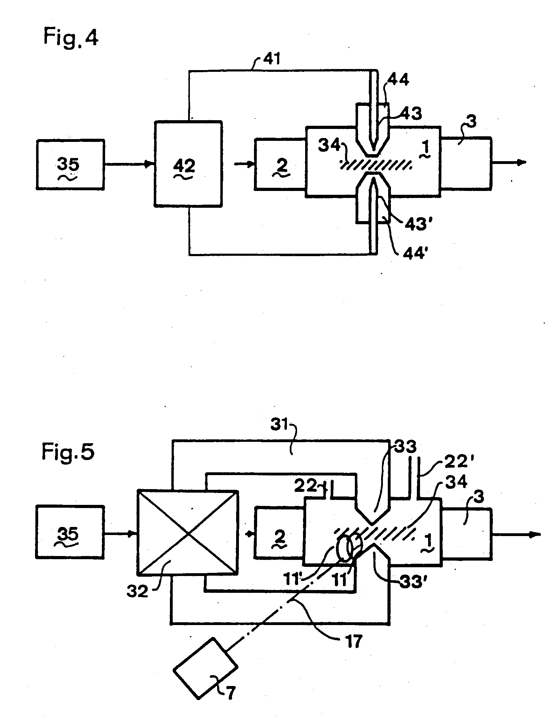

In Analogie zur Anreicherung von paramagnetischen Gasmolekülen im inhomogenen Magnetfeld ist eine Anreicherung von Gas- oder Dampf-Molekülen mit permanentem elektrischen Dipolmoment im inhomogenen elektrischen Feld denkbar. Das inhomogene elektrische Feld lässt sich, wie in Fig. 4 dargestellt ist, mittels spitzer- oder schneidenförmiger Elektroden 43, 43' schaffen, die über die elektrischen Zuleitung 41 mit einem Hochspannungsgenerator 42 in Verbindung stehen. Der Generator 35 liefert in Analogie zu demjenigen von Fig. 3 ein zeitlich veränderliches, beispielsweise periodisches Signal, mit dem über den Hochspannungsgenerator 42 im schallgeschwindigkeitsempfindlichen Bereich 34 des Ultraschallresonators 1 ein inhomogenes, variables, elektrisches Feld aufgebaut wird. Zur Verhinderung von elektrischen Durchschlägen an den Elektrodenspitzen ist es gegebenenfalls ratsam, die Elektroden mit dielektrischen Umhüllungen 44 zu umgeben.

Das aufgezeigte Verfahren des Sauerstoffnachweises bietet den grossen Vorteil, dass es sich mit einer $CO_2$-Messung kombinieren lässt. Wird nämlich zusätzlich zum Anlegen eines inhomogenen Magnetfeld intensitätsmoduliertes Infrarotlicht einer Wellenlänge von 4.3 um (Die Absorptionsfrequenz von $CO_2$) in den Ultraschall-Resonatorraum eingestrahlt, so lässt sich wegen der periodischen Erwärmung auch die Kohlensäurekonzentration der Luft selektiv nachweisen.

Fig. 5 ist ein Beispiel einer Darstellung einer solchen kombinierten Vorrichtung zur gleichzeitigen Messung von Sauerstoff und einem lichtabsorbierenden Gas, wie etwa Kohlensäure. In den schallgeschwindigkeitsempfindlichen Bereich 34 des Ultraschallresonators 1 wird einerseits intensitätsmoduliertes Infrarotlicht 17 eingestrahlt, andererseits wird in diesem Bereich 34 zusätzlich mittels eines Elektromagneten 31 und geeigneten Polschuhen 33, 33' ein inhomogenes, periodisches Magnetfeld geschaffen. Die Lichteinstrahlung bewirkt über die Absorption Temperaturschwankungen , welche zu einer periodischen Verstimmung des Resonators 1 Anlass geben, während das periodische Magnetfeld die Schallgeschwindigkeit über die periodische Gasaufkonzentration beeinflusst.

Die beiden Felder können entweder alternierend angelegt sein, wobei ein einziger zweiter Niederfrequenz-Demodulator 15 zum Einsatz kommt. Der Sauerstoffgehalt und die Kohlensäurekonzentration der Luft lassen sich sogar gleichzeitig messen (was für die Ueberwachung von Atmungsvorgängen besonders wichtig ist), falls das inhomogene Magnetfeld und die Infrarotstrahlung mit verschiedener Frequenz moduliert werden. Die Separation der beiden Niederfrequenz-Signale geschieht durch Lock-in Detektion mit den entsprechenden Referenzfrequenzen. In diesem Falle sind die entsprechenden Signale über zwei verschiedene Niederfrequenz-Demodulatoren 15 und 15' zu erfassen.

Ebenso wie die aufgezeigte Anordnung ist die Kombination der magnetischen Methode, wie sie in Fig. 3 beschrieben ist mit der elektrischen Methode von Fig. 4 denkbar.

Durch simultane Anwendung eines magnetischen und eines elektrischen Wechselfeldes sowie durch Infraroteinstrahlung lassen sich sogar drei Gase, nämlich Sauerstoff, Kohlensäure und Wasserdampf gleichzeitig selektiv bestimmen. Eine solche Vorrichtung wäre beispielsweise zur Ueberwachung der Atemtätigkeit wünschenswert.

Der Uebersichtlichkeit halber wurde auf die Darstellung einer Thermostatisierung des Ultraschallresonators 1 in Fig. 3, Fig. 4 und Fig. 5 verzichtet. Gegebenenfalls könnte sich eine solche Massnahme, wie in Fig. 2 dargestellt, zur Erniedrigung von thermisch bedingten Störungen als vorteilhaft erweisen. Ebenso ist daran zu denken, dass Mittel zur mechanischen Abstimmung - gegebenenfalls nur zur Grobabstimmung - vorhanden sind, wie sie in Fig. 1 aufgezeigt sind.

**Patentansprüche**

1. Verfahren zum selektiven Nachweis von Gasen und Dämpfen einer Gas- und/oder Dampfmischung, **dadurch gekennzeichnet,** dass eine An- oder Abreicherung des nachzuweisenden Mediums in einem inhomogenen magnetischen oder elektrischen Feld erfolgt und dass der Nachweis der Gas- oder Dampf-Konzentrationsänderung über die Messung einer Aenderung der Schallgeschwindigkeit vorgenommen wird.

2. Verfahren nach Anspruch 1, **dadurch gekennzeichnet,** dass das inhomogene Feld ein periodisch variiertes Feld ist.

3. Verfahren nach Anspruch 1 oder 2, **dadurch gekennzeichnet,** dass das inhomogene Feld ein Magnetfeld ist.

4. Verfahren nach Anspruch 1 oder 2, **dadurch gekennzeichnet,** dass das inhomogene Feld ein elektrisches Feld ist.

5. Verfahren nach Anspruch 1, **dadurch gekennzeichnet,** dass die Messung der Schallgeschwindigkeitsänderung über eine Laufzeitmessung eines Schallpulses vorgenommen wird.

6. Verfahren nach Anspruch 1, **dadurch gekennzeichnet,** dass die Messung der Schallgeschwindigkeitsänderung über die Verstimmung eines Ultraschallresonators vorgenommen wird.

7. Verfahren nach Anspruch 1, **dadurch gekennzeichnet,** dass die Aenderung der Schallgeschwindigkeit nebst durch An- oder Abreicherung des nachzuweisenden Mediums in einem inhomogenen Feld auch durch Lichteinstrahlung bewirkt wird.

8. Vorrichtung zum selektiven Nachweis von Gasen und Dämpfen einer Gas- und/oder Dampfmischung mit zwei einander gegenüber angeordneten, ein schallgeschwindigkeitsempfindliches Gebiet (34) schaffenden, Ultraschallwandlern (2, 3), zugehöriger Ansteuerungs- (4, 12), Regler- (6, 16) und gegebenenfalls Demodulations-Elektronik (5, 15), **dadurch gekennzeichnet,** dass Mittel (31, 32, 33, 33', 35, 41, 42, 43, 43', 45) zur Erzeugung eines inhomogenen magnetischen oder elektrischen Feldes vorhanden sind, wobei das inhomogene magnetische oder elektrische Feld derart angeordnet ist, dass es auf das nachzuweisende Medium im schallgeschwindigkeitsempfindlichen Gebiet (34) zwischen den beiden Ultraschallwandlern (2, 3) wirken kann und dass Mittel (5, 15, 8) zum Messen der Aenderung der Schallgeschwindigkeit vorgesehen sind.

9. Vorrichtung nach Anspruch 8, **dadurch gekennzeichnet,** dass der Ultraschallsender (2) derart mit der Ansteuerungselektronik verbunden ist, dass Schallpulse abgegeben werden können und der Ultraschallempfänger (3) derart angeordnet ist, dass er diese Ultraschallpulse nach passieren des inhomogenen Feldes empfangen kann.

10. Vorrichtung nach Anspruch 8, **dadurch gekennzeichnet,** dass der Ultraschallsender (2) und der Ultraschallempfänger (3) derart bemessen und angeordnet sind und derart mit mindestens einer Ansteuerungsvorrichtung (4, 12) verbunden sind, dass sich zwischen den beiden Ultraschallwandlern (2, 3) ein Ultraschallresonator (1) bildet.

11. Vorrichtung nach Anspruch 8, **dadurch gekennzeichnet,** dass ein Elektromagnet (31) derart angeordnet ist und Polschuhe (33, 33') derart in eine Spitze zulaufend oder schneidenförmig gestaltet sind und eine Magnetwicklung (32) derart mit einem Steuergerät (35) verbunden ist, dass sich im schallgeschwindigkeitsempfindlichen Gebiet (34) der Ultraschallwandler (2, 3) ein inhomogenes, gegebenenfalls periodisches Magnetfeld bildet.

12. Vorrichtung nach Anspruch 8, **dadurch gekennzeichnet,** dass ein Hochspannungsschaltkreis (41) und Elektroden (43, 43') derart angeordnet und letztere in eine Spitze zulaufend oder schneidenförmig gestaltet sind, gegebenenfalls zusätzlich von Isolatoren (44, 44') umgeben sind und derart mit einem Steuergerät (35) verbunden ist, dass sich im schallgeschwindigkeitsempfindlichen Gebiet (34) der Ultraschallwandler (2, 3) ein inhomogenes, gegebenenfalls periodisches, elektrisches Feld bildet.

13. Vorrichtung nach Anspruch 11 und /oder Anspruch 12, **dadurch gekennzeichnet,** dass nebst den Mitteln (31, 32, 33, 33', 35, 41, 42, 43, 43', 45) zur Erzeugung eines inhomogenen magnetischen und/oder elektrischen Feldes ein Lichtstrahl (7) derart angeordnet ist und gegebenenfalls ein Fenster (11) und ein Filter (11') vorhanden sind, dass ein Lichtstrahl (17) in das schallgeschwindigkeitsempfindliche Gebiet (34) zwischen den Ultraschallwandlern (1, 2) gelangen kann.

14. Vorrichtung nach Anspruch 8, **dadurch gekennzeichnet,** dass zur Reduktion von Störungen in mindestens einer Gasleitung (22, 22') ein Strömungswiderstand (23, 23') angebracht ist und/oder die Gaszuleitung (22) eine Thermostatisierung (24) enthält, gegebenenfalls der Ultraschallresonator (1) mit thermostatisierenden Mitteln in Form einer Thermostatisierung (28), eines Steuergerätes (28') und einem Thermosensor (28'') versehen und von einer Wärmeisolation (27) umgeben ist.

15. Verwendung der Vorrichtung nach einem oder mehreren der Ansprüche 8 bis 14 zur Detektion von Sauerstoff und/oder gegebenenfalls Wasserdampf und/oder Kohlensäure.

**Claims**

1. Process for selective detection of gases and vapors of a gas and/or vapor mixture, characterized in that there is an enrichment or diminution of the medium to be measured in an inhomogeneous magnetic or electric field and that the detection of the change in the gas or vapor concentration is accomplished by measuring the change of the velocity of sound.

2. Process according to claim 1, characterized in that the inhomogeneous field is a periodically variable field.

3. Process according to claim 1 or 2, characterized in that the inhomogeneous field is a magnetic field.

4. Process according to claim 1 or 2, characterized in that the inhomogeneous field is an electric field.

5. Process according to claim 1, characterized in that the measurement of the velocity of sound is accomplished by measuring the propagation time of a sonic pulse.

6. Process according to claim 1, characterized in that the measurement of the velocity of sound is accomplished by measuring the detuning of an ultrasonic resonator.

7. Process according to claim 1, characterized in that the change of the velocity of sound is accomplished by the irradiation of light in addition to the enrichment or diminution of the medium to be measured via an inhomogeneous field.

8. Apparatus for selective detection of gases or vapors of a gas or vapor mixture, comprising two ultrasonic transducers (2, 3), facing each other and defining a velocity-of-sound sensitive range (34), electronic means for operating (4, 12), controlling (6, 16) and, if necessary, demodulation (5, 15), characterized in that there are means (31, 32, 33, 33', 35, 41, 42, 43, 43', 45) for inducing an inhomogeneous magnetic or electric field, whereby the inhomogeneous magnetic or electric field is arranged in such a way as to act on the medium to be measured which is positioned in the velocity-of-sound sensitive range (34) between the two ultrasonic transducers (2, 3) and that means (5, 15, 8) are provided for measuring the change of the velocity of sound.

9. Apparatus according to claim 8, characterized in that the ultrasonic emitter (2) is connected with the operating electronics in such a way as to emit sonic pulses and the ultrasonic receiver (3) is arranged in such a way as to receive these pulses after they have passed through the inhomogeneous field.

10. Apparatus according to claim 8, characterized in that the ultrasonic emitter (2) and the ultrasonic receiver (3) being dimensioned, arranged and connected to at least one operating electronic device (4, 12) in such a way as to form an ultrasonic resonator (1).

11. Apparatus according to claim 8, characterized in that an electromagnet (31) is arranged and the pole-pieces (33, 33') are tip- or edge-shaped, and the magnet coil (32) is connected to the operating device (35) in such a way as to form an inhomogeneous, and if necessary, periodic magnetic field in the velocity-of-sound sensitive range (34) of the ultrasonic transducers (2, 3).

12. Apparatus according to claim 8, characterized in that a high voltage circuit (41) and the electrodes (43, 43') are arranged and the latter are tip- or edge-shaped and are optionally surrounded by isolators (44, 44') and connected to an operating device (45) in such a way as to form an inhomogeneous and, if necessary, periodic electric field in the velocity-of-sound sensitive range (34) of the ultrasonic transducers (2, 3).

13. Apparatus according to claim 11 and/or 12, characterized in that, besides of the means (31, 32, 33, 33', 35, 41, 42, 43, 43', 45) to form an inhomogeneous magnetic or an electric field, a light beam (7) is arranged and there is, if necessary, a window (11) and a filter (11') to permit entry of a light beam (17) into the velocity-of-sound sensitive range (34) between the ultrasonic transducers (2, 3).

14. Apparatus according to claim 8, characterized in that at least one flow resistance (23, 23') is attached in the gas pipes (22, 22') and/or there is a thermostat (24) in the gas pipe (22) and, if necessary, the ultrasonic resonator (1) is equipped with thermostating means consisting of a thermostat (28), an operating device (28'), a thermal sensor (28'') and a thermal insulation (27) to reduce thermal disturbances.

15. Use of the apparatus according to one or several of the claims 8 to 14 in order to detect oxygen and, if necessary, water vapor or carbon dioxide, or both.

**Revendications**

1. Procédé de détection sélective de gaz et de vapeurs d'un mélange de gaz et/ou de vapeurs, caractérisé en ce qu'il y a un enrichissement ou un appauvrissement du medium à détecter dans un champ magnétique ou électrique inhomogène et que la détection de la concentration du gaz ou de la vapeur est effectuée par mesure du changement de la vitesse du son.

2. Procédé selon la revendication 1, caractérisé en ce que le champ inhomogène est un champ variable périodique.

3. Procédé selon la revendication 1 ou 2, caractérisé en ce que le champ inhomogène est un champ magnétique.

4. Procédé selon la revendication 1 ou 2, caractérisé en ce que le champ inhomogène est un champ électrique.

5. Procédé selon la revendication 1, caractérisé en ce que la mesure du changement de la vitesse du son est effectuée par une mesure du temps de propagation d'une impulsion de son.

6. Procédé selon la revendication 1, caractérisé en ce que la mesure du changement de la vitesse du son est effectuée par le désaccord d'un résonateur ultrasonique.

7. Procédé selon la revendication 1, caractérisé en ce que le changement de la vitesse du son est effectuée, en plus de l'enrichissement ou de l'appauvrissement du medium à détecter dans un champ inhomogène, aussi par radiation lumineuse.

8. Dispositif qui sert à détecter sélectivement des gaz et des vapeurs d'un mélange de gaz et/ou de vapeurs, composé de deux transformateurs d'ultrason (2, 3), l'un en face de l'autre, formant une région sensible à l'ultrason (34), et comprenant l'électronique de contrôle (4, 12) et de réglage (6,16) et éventuellement de l'électronique de démodulation (5, 15), caractérisé en ce qu'il y a des moyens (31, 32, 33, 33', 35, 41, 42, 43, 43', 45) pour créer un champ magnétique ou électrique inhomogène, tels que le champ magnétique ou électrique inhomogène est arrangé de manière à influencer le medium à détecter dans la région sensible à l'ultrason (34), et qu'il y a des moyens (5, 15, 8) pour mesurer le changement de la vitesse du son.

9. Dispositif selon la revendication 8, caractérisé en ce que l'émetteur ultrasonique (2) est lié avec l'électronique de contrôle, de manière à émettre des impulsions de son et que le récepteur ultrasonique (3) est arrangé tel qu'il peut recevoir les impulsions de son après leur passage dans le champ inhomogène.

10. Dispositif selon la revendication 8, caractérisé en ce que l'émetteur ultrasonique (2) et le récepteur ultrasonique (3) sont dimensionés et arrangés et lié à au moins une électronique de contrôle, tel qu'il y a un résonateur ultrasonique (1) entre les deux transducteurs d'ultrason (2, 3).

11. Dispositif selon la revendication 8, caractérisé en ce qu'un électroaimant (31) est arrangé et les pièces polaires (33, 33') forment une pointe ou un tranchant et la bobine (32) est liée avec l'appareil de contrôle (32), de manière à créer un champ magnétique inhomogène et éventuellement périodique dans la région sensible à l'ultrason (34) des transducteurs d'ultrason (2, 3).

12. Dispositif selon la revendication 8, caractérisé en ce qu'un couplage à haute tension (41) et des électrodes (43, 43') formant une pointe ou un tranchant et, éventellement,entourées des isolations (44, 44'), et sont liées avec un appareil de contrôle (35), de manière à créer un champ électrique inhomogène et éventuellement périodique dans la région sensible à l'ultrason (34) des transducteurs d'ultrason (2, 3).

13. Dispositif selon la revendication 11 et/ou 12, caractérisé en ce qu'il existe, en plus des moyens (31, 32, 33, 33', 35, 41, 42, 43, 43', 45) pour créer un champ magnétique ou électrique inhomogène, au moins un rayon lumineux (7) et éventuellement une fenêtre (11) et un filtre (11') de manière qu'un rayon de lumière (17) peut pénétrer la région sensible à l'ultrason (34) entre les transducteurs d'ultrason (2, 3).

14. Dispositif selon la revendication 8, caractérisé en ce qu'il existe une résistance de flux (23, 23') au moins dans un des tuyaux de gaz (22, 22') pour réduire des perturbations et/ou il existe un thermostat (24) dans le tuyau de gaz (22), et éventuellement le résonateur ultrasonique (1) est muni de moyens thermostatiques formés d'un thermostat (28), d'un appareil de contrôle (28') et d'un capteur thermique (28'') et que le résonateur ultrasonique (1) est environné d'une isolation thermique.

15. Application du dispositif selon une ou plusieurs des revendications 8 à 14 pour la détection de l'oxygène et/ou éventuellement de vapeur d'eau et/ou de l'acide carbonique.

Fig. 1

Fig. 2

Fig. 3

## Fig.4

## Fig.5